# EUROPÄISCHE PATENTSCHRIFT

(11) **EP 4 580 826 B1**
(45) Veröffentlichungstag und Bekanntmachung des Hinweises auf die Patenterteilung: **14.01.2026**
(21) Anmeldenummer: 24768608.2
(22) Anmeldetag: 13.09.2024
(51) Int. Cl.: B23K 37/003, B04C 5/04, B04C 5/13, B04C 5/187, B04C 5/20, B04C 9/00, B23K 9/16, B23K 9/28, B23Q 11/10

(54) **KUEHLSYSTEM ZUR KUEHLUNG EINER SCHWEISSKOMPONENTE UND SCHWEISSKOMPONENTE MIT EINEM SOLCHEN KUEHLSYSTEM**
COOLING SYSTEM FOR COOLING A WELDING COMPONENT, AND WELDING COMPONENT COMPRISING SUCH A COOLING SYSTEM
SYSTÈME DE REFROIDISSEMENT POUR REFROIDIR UN ÉLÉMENT DE SOUDAGE, ET ÉLÉMENT DE SOUDAGE COMPRENANT UN TEL SYSTÈME DE REFROIDISSEMENT

(30) Priorität: 14.09.2023 EP 23197313
(43) Veröffentlichungstag der Anmeldung: 09.07.2025
(73) Patentinhaber: FRONIUS INTERNATIONAL GmbH, 4643 Pettenbach (AT)
(72) Erfinder: FINK, Reinhold, 4643 Pettenbach (AT)
(74) Vertreter: SONN Patentanwälte GmbH & Co KG
(86) Internationale Anmeldenummer: PCT/EP2024/075583
(87) Internationale Veröffentlichungsnummer: WO 2025/056729

(56) Entgegenhaltungen:
- EP-A1- 4 046 736
- EP-A1- 4 112 218
- EP-B1- 2 039 893
- DE-A1- 102007 011 457
- DE-C1- 19 914 674
- JP-A- 2013 248 706
- JP-A1- WO2016 170 809
- US-A- 2 754 968
- US-A- 6 162 355
- US-A1- 2019 039 078

## Beschreibung

Die Erfindung betrifft ein Kühlsystem zur Kühlung einer Schweißkomponente, insbesondere eines Schweißbrenners und/oder eines Schlauchpakets, mit zumindest einem Behälter für Kühlflüssigkeit, einem Kühlkreislauf mit entsprechenden Kühlleitungen, zumindest einer im Kühlkreislauf angeordneten Pumpe zur Förderung der Kühlflüssigkeit durch die Kühlleitungen im Kühlkreislauf, zumindest einem in einer Kühlleitung angeordneten Wärmetauscher, sowie zumindest einem im Kühlkreislauf angeordneten Filter, wobei zumindest ein Filter durch ein Hydrozyklon bzw. einen Fliehkraftabscheider gebildet ist, welcher Hydrozyklon einen rotationssymmetrischen Hohlkörper aufweist, mit einem oberen zylindrischen Bereich mit zumindest einer tangentialen Zuleitung für die zu filternde Kühlflüssigkeit und einem axial angeordneten Tauchrohr zum Abführen der gefilterten Kühlflüssigkeit nach oben, und mit einem unteren konisch zusammenlaufenden Bereich mit einem Auslass für die abgeschiedenen Partikel aus der P Kühlflüssigkeit (siehe beispielsweise EP 2 039 893 B1).

Weiters betrifft die Erfindung eine Schweißkomponente, insbesondere einen Schweißbrenner und bzw. oder ein Schlauchpaket, mit einem Kühlkanal zur Führung einer Kühlflüssigkeit.

Die vorliegende Erfindung ist auf Schweißkomponenten bzw. deren Kühlung gerichtet, insbesondere auf Schutzgasschweißkomponenten, wie einem Schweißbrenner und einem Schlauchpaket. Flüssigkeitskühlsysteme für Schweißvorrichtungen bestehen üblicherweise aus einer Pumpe, einer Kühlflüssigkeit, einer Kühlleitung, den zu kühlenden Schweißkomponenten, einem Behälter für die Kühlflüssigkeit, einem Wärmetauscher und optional einem Filter, einem Durchflusswächter und einer Einrichtung zur Messung der Temperatur der Kühlflüssigkeit. Die verwendeten Kühlflüssigkeiten basieren meist auf Wasser mit verschiedenen beigemengten Zusätzen.

Beispielsweise beschreibt die EP 4 112 218 A1 ein Kühlsystem für Schweißkomponenten der gegenständlichen Art.

Die EP 2 039 893 B1, die JP 2013248706 A sowie die JP-WO2016170809 A1 zeigen Einrichtungen zum Reinigen eines Schmiermittels in einem Schmiermittelkreislauf bzw. eines Kühlmittels in einem Kühlmittelkreislauf unter Anwendung eines Hydrozyklons der gegenständlichen Art.

Zyklone und Hydrozyklone für verschiedene Anwendungen sind beispielsweise auch aus der DE 10 2007 011 457 A1, DE 199 14 674 C1, US 2019/0039078 A1, US 2,754,968 A oder US 6,162,355 A bekannt geworden.

Verunreinigungen im Kühlsystem können produktionsbedingt oder beim Betrieb der Schweißkomponente auftreten. Beispielsweise können Verunreinigungen beim Wechsel der Kühlflüssigkeit durch Schmutzanhaftungen, oder durch ungeeignete alternative Kühlmittel (z.B. Leitungswasser) in das Kühlsystem einbracht werden. Darüber hinaus entstehen Schmutzpartikel aber auch durch Verschleiß von Schweißkomponenten, wie zum Beispiel durch Bruchstücke von Kupferlitzen von Schweißkabeln durch die Bewegung der Kabel und Schlauchpakete, die Ablagerung von Metalloxiden durch Reaktion der Metalle, welche von der Kühlflüssigkeit berührt werden, etc.

Um die Kühlflüssigkeit von solchen Verunreinigungen zu befreien, werden bei Kühlsystemen üblicherweise konventionelle Filter verwendet. Solche Filter bestehen aus Filtermedium, Metallsieben oder Papier, welche Partikel mit einer Größe, die größer als die Maschenweite bzw. Porenweite des Filtermaterials sind, abscheiden. Zur Erzielung einer optimalen Reinigung der Kühlflüssigkeit müssen Filtermaterialien mit relativ geringer Maschenweite, beispielsweise von 10 µm, verwendet werden. Zur Erzielung eines bestimmten Durchflusses müssten solche Filter aber sehr große Flächen beanspruchen, welche bei Kühlsystemen für Schweißkomponenten häufig nicht zur Verfügung stehen oder zumindest unerwünscht sind. Darüber hinaus verstopfen solche Feinstfilter relativ rasch und müssen nach kurzer Betriebsdauer ausgetauscht werden, um weiterhin eine Funktion des Kühlsystems erzielen zu können. Bei Verwendung von Filtern mit größerer Maschenweite können wiederum mehr Partikel die Filter passieren und zu einer Beeinträchtigung der Kühlwirkung und einer Beschädigung von Komponenten innerhalb des Kühlkreislaufes führen. Insbesondere abrasiv wirkende Partikel in der Kühlflüssigkeit können die Pumpen zur Förderung der Kühlflüssigkeit durch den Kühlkreislauf beschädigen.

Kreisel- oder Peripheralradpumpen sind relativ unempfindlich gegenüber Schmutzpartikel im zu fördernden Kühlmedium und es kann eine relativ hohe Lebensdauer erzielt werden. Allerdings ist bei solchen Pumpen der unerwünscht nichtlineare Zusammenhang zwischen Drehzahl und geförderter Menge an Kühlmedium nachteilig. Deshalb werden verstärkt Verdrängerpumpen, wie zum Beispiel Kolbenpumpen oder Zahnradpumpen bei Kühlsystemen für Schweißkomponenten eingesetzt, welche einen direkt proportionalen Zusammenhang zwischen Antriebsdrehzahl und geförderter Menge an Kühlflüssigkeit zeigen, wodurch die Regelung der Kühlung erleichtert wird. Verdrängerpumpen arbeiten allerdings mit sehr engen Passungen, weshalb jede Art von Schmutz im zu fördernden Medium zu vermeiden ist, der die dichtenden Flächen (Zahnrad - Gehäuse, Kolben - Zylinder) zerstören kann. Daher ist für eine möglichst hohe Lebensdauer auch solcher Pumpen eine optimale Reinigung der Kühlflüssigkeit anzustreben. Beispielsweise wird bei Schweißsystemen eine Lebensdauer von mindestens 20000 Stunden angestrebt.

Die Aufgabe der vorliegenden Erfindung besteht in der Schaffung eines oben genannten Kühlsystems und einer oben erwähnten Schweißkomponente mit einem solchen Kühlsystem, durch welches eine möglichst hohe Lebensdauer des Kühlsystems und der Schweißkomponente und somit besonders lange Wartungsintervalle erzielt werden können. Auch bei der Verwendung von Verdrängerpumpen zur Förderung der Kühlflüssigkeit soll eine hohe Lebensdauer erzielbar sein. Die Baugröße des Kühlsystems soll möglichst klein sein, um eine Anwendung insbesondere bei kompakten Schweißkomponenten zu ermöglichen. Nachteile bekannter Kühlsysteme sollen vermieden oder zumindest reduziert werden.

Gelöst wird die erfindungsgemäße Aufgabe durch ein oben genanntes Kühlsystem zur Kühlung einer Schweißkomponente, wobei der zumindest eine Hydrozyklon im Behälter für die Kühlflüssigkeit angeordnet und integriert ist. Durch den Einsatz eines Hydrozyklons zur Abscheidung kleiner Partikel aus der Kühlflüssigkeit kann der üblicherweise hohe Dichteunterschied zwischen Kühlflüssigkeit und Schmutzpartikel (häufig Metallpartikel oder Oxidpartikel) ausgenützt und eine optimale Filterung erzielt werden. Beim Hydrozyklon werden tangentiale Strömungsgeschwindigkeiten in Fliehkräfte umgewandelt, wodurch die schweren Partikel nach außen gezogen, durch die Wandreibung abgebremst und aus der Strömung gelöst werden. Flieh- und Schwerkraft-bedingt werden die schwereren Partikel schlussendlich über den Auslass abgeschieden. Die leichtere Kühlflüssigkeit verlässt den Hydrozyklon über das axial bzw. mittig angebrachte Tauchrohr. Vorteilhafterweise besitzt der Hydrozyklon keine bewegten Teile, was wiederum zu einer hohen Lebensdauer führt. Der zumindest eine Hydrozyklon wird an einer geeigneten Stelle im Kühlkreislauf angeordnet. Dadurch, dass der zumindest eine Hydrozyklon im Behälter für die Kühlflüssigkeit angeordnet und integriert ist, wird der Platzbedarf im Wesentlichen nicht erhöht. Bei Schweißvorrichtungen ist der Kühlflüssigkeitsbehälter häufig in der Schweißstromquelle integriert. Je nach Baugröße des Hydrozyklons ist das auch bei kompakten Schweißkomponenten relativ leicht möglich. Vorzugsweise wird der zumindest eine Hydrozyklon im Rücklauf des Kühlkreislaufs angeordnet, sodass die allenfalls abrasiven Partikel optimal abgeschieden und aus der Kühlflüssigkeit entfernt werden um die Pumpe vor den Partikeln zu schützen. Je nach verwendeten Materialien und Herstellungsmethoden kann ein solcher Hydrozyklon relativ einfach und kostengünstig hergestellt werden. Für Schweißsysteme wird der zumindest eine Hydrozyklon vorzugsweise zur Abscheidung von Partikeln mit einem mittleren Durchmesser von größer oder gleich 50 µm aus der Kühlflüssigkeit ausgebildet. Für die Anwendung bei üblichen Schweißkomponenten wird der Hydrozyklon beispielsweise eine Höhe zwischen 50 mm und 300 mm und einen Durchmesser zwischen 20 mm und 100 mm aufweisen.

Wenn im Kühlkreislauf mehrere Hydrozyklone in Serie angeordnet sind, kann bei geringer Baugröße der Hydrozyklone eine stufenweise Abscheidung der Partikel aus der Kühlflüssigkeit und somit eine Aufteilung der Filterung auf mehrere Stufen erfolgen. Die in Serie angeordneten Hydrozyklone können baugleich oder auch in verschiedener Baugröße zur Abscheidung verschiedener Größen von Partikel ausgebildet sein. Theoretisch ist bei der Filterung hoher Volumina auch eine parallele Anordnung mehrerer Hydrozyklone denkbar, was allerdings bei der Kühlung von Schweißkomponenten nicht der Fall ist.

Unter dem Auslass jedes Hydrozyklons ist gemäß einem weiteren Merkmal der Erfindung ein Sammelbehälter für die abgeschiedenen Partikel vorgesehen. Im Sammelbehälter werden die abgeschiedenen Partikel aufgefangen. Durch eine Engstelle im Auslass der Hydrozyklons bzw. zwischen Auslass und Sammelbehälter werden die abgeschiedenen Partikel hydraulisch voneinander getrennt, wodurch die Abscheidung nicht reversibel gemacht werden kann, da die Partikel aus dem Sammelbehälter nicht wieder in den Kühlkreislauf gelangen können.

Der Sammelbehälter kann theoretisch fix am Hydrozyklon befestigt sein und der Hydrozyklon auf Lebensdauer ausgelegt sein. Von Vorteil ist es aber, den Sammelbehälter vom Auslass des Hydrozyklons abnehmbar auszubilden, sodass dieser bei Bedarf entleert werden kann. Die abnehmbare Anordnung des Sammelbehälters am Auslass des Hydrozyklons kann beispielsweise durch eine Schraubverbindung oder eine Schnappverbindung erzielt werden.

Vorteilhafter Weise ist der Hydrozyklon aus Kunststoff gebildet. Wie bereits oben erwähnt, kann dadurch der Hydrozyklon besonders kostengünstig hergestellt werden, beispielsweise im Spritzgiessverfahren.

Wenn die Innenseite des Hohlkörpers des Hydrozyklons eine Beschichtung aufweist, kann die Abscheidung der Partikel aus der Kühlflüssigkeit unterstützt und die Lebensdauer des Hydrozyklons erhöht werden. Eine solche Beschichtung kann beispielsweise aus Keramik oder Gummi bestehen, welche mit geeigneten Methoden aufgebracht wird.

Der zumindest eine Hydrozyklon kann auch einstückig mit dem Behälter für die Kühlflüssigkeit hergestellt sein. Üblicherweise ist der Behälter für die Kühlflüssigkeit aus Kunststoff gebildet, und beispielsweise in einem Spritzgiessverfahren hergestellt. Bei dieser Herstellungsmethode lässt sich der zumindest eine Hydrozyklon zusammen mit den notwendigen Zuleitungen und mit dem Sammelbehälter für die abgeschiedenen Partikel einfach und kostengünstig zusammen mit dem Behälter für die Kühlflüssigkeit herstellen.

Wenn im Kühlkreislauf in Serie mit dem zumindest einen Hydrozyklon ein zusätzlicher Filter, vorzugsweise ein Feinfilter oder Feinstfilter, angeordnet ist, kann die Kühlflüssigkeit noch besser gereinigt werden. Durch diese Maßnahme wird die Lebensdauer des Kühlsystems erhöht und bzw. oder die Abscheideleistung verbessert. Der zumindest eine Hydrozyklon kann auch die Vorabscheidung mittlerer bis grober Partikel übernehmen, wohingegen der zumindest eine zusätzliche Filter die Abscheidung feinster Partikel erledigt. Der zusätzliche Filter kann konventionell ausgebildet sein und aus geeignetem Filtermedium oder Papier bestehen oder Metallsiebe vorgegebener Maschenweite enthalten.

Der genannte zusätzliche Filter kann im Hydrozyklon integriert sein, beispielsweise im Bereich des Tauchrohrs des Hydrozyklons angeordnet sein. Dies stellt eine besonders platzsparende Bauweise dar.

Die Pumpe des Kühlsystems kann durch eine Kolbenpumpe oder eine Zahnradpumpe gebildet sein. Wie bereits oben erwähnt, sind derartige Verdrängerpumpen vorteilhaft, da die Menge der geförderten Kühlflüssigkeit direkt proportional zur Drehzahl der Pumpe ist. Dies vereinfacht die Regelung der Kühlung.

Wenn im Kühlkreislauf ein Temperatursensor zur Messung der Temperatur der Kühlflüssigkeit im Kühlkreislauf angeordnet ist, kann die Kühlwirkung erfasst werden. Die gemessene Temperatur der Kühlflüssigkeit kann zu Dokumentations- oder Überwachungszwecken oder auch zur Regelung bestimmter Vorgänge herangezogen werden.

Wenn im Kühlkreislauf ein Durchflusssensor zur Messung des Durchflusses der Kühlflüssigkeit im Kühlkreislauf angeordnet ist, kann wichtige Informationen über die Strömung der Kühlflüssigkeit im Kühlkreislauf gewonnen werden können. Die gemessenen Durchflusswerte der Kühlflüssigkeit können zu Dokumentations- oder Überwachungszwecken oder auch zur Regelung bestimmter Vorgänge verwendet werden.

Wenn ein Leitwertsensor zur Messung des Leitwerts der Kühlflüssigkeit im Kühlkreislauf angeordnet ist, kann der Zustand der Kühlflüssigkeit überprüft werden und es können bei bestimmten Leitwerten entsprechende Warnungen ausgegeben oder automatisch Regelungen vorgenommen werden. Die Kühlleitungen und Kühlkanäle des Kühlkreislaufs weisen in der Regel unterschiedliche Materialien auf. Im Falle von elektrisch leitfähigen Materialien, wie Metallen oder Metalllegierungen, zeigen unterschiedliche Materialien unterschiedliche Standardpotentiale der elektrochemischen Spannungsreihe. Liegen die verschiedenen Bauteile im Kühlkreislauf auf unterschiedlichen elektrischen Potentialen, kann es über die elektrisch leitende Kühlflüssigkeit zu einem elektrochemischen Stromfluss über die Kühlflüssigkeit kommen und ein sukzessiver Abbau des Bauteils am Plus-Potential (Opferanode) kommen. Die Geschwindigkeit des Abbaus ist dabei unter anderem proportional zur Leitfähigkeit der Kühlflüssigkeit. Um den Leitwert niedrig zu halten, können im Kühlkreislauf Deionisiereinrichtungen vorgesehen sein.

Die oben erwähnten Sensoren zur Messung der Temperatur, des Durchflusses und bzw. oder des Leitwerts der Kühlflüssigkeit und Sensor zur Messung des Durchflusses der Kühlflüssigkeit können auch kombiniert und an einer oder auch an mehreren Stellen im Kühlkreislauf platziert werden. Kombinierte Sensoren für alle genannten Eigenschaften sind relativ kostengünstig und in geringer Baugröße erhältlich.

Im Kühlkreislauf kann eine Einrichtung zur Deionisierung der Kühlflüssigkeit vorgesehen sein, um die elektrische Leitfähigkeit der Kühlflüssigkeit zu verringern und einen elektrochemischen Abbau von Komponenten der Schweißvorrichtung zu verhindern. In einer Deionisiereinrichtung werden die Ionen aus der Kühlflüssigkeit mit Hilfe eines Deionisierharzes entfernt.

Die Kühlflüssigkeit ist meist durch Wasser mit Zusätzen, insbesondere Glykol, gebildet. Dem Wasser können auch andere Frostschutzmittel, wie Ethanol, Propylenglykol, Ethylenglykol oder allgemeine wasserlösliche Alkohole, allgemeine wasserlösliche Polyalkohole oder Korrosionsinhibitoren zugesetzt werden. Ferner können der Kühlflüssigkeit noch Algizide und bzw. oder Fungizide beigemengt sein.

Die Erfindung wird auch durch eine oben genannte Schweißkomponente, insbesondere einen Schweißbrenner und bzw. oder ein Schlauchpaket, mit einem Kühlkanal zur Führung einer Kühlflüssigkeit gelöst, wobei ein oben beschriebenes Kühlsystem vorgesehen ist, dessen Kühlkreislauf zumindest teilweise durch den Kühlkanal der Schweißkomponente gebildet ist. Zu den dadurch erzielbaren Vorteilen wird auf die obige Beschreibung des Kühlsystems für Schweißkomponenten verwiesen.

Die vorliegende Erfindung wird anhand der beigefügten Zeichnungen näher erläutert. Darin zeigen:
- Fig. 1: ein schematisches Blockschaltbild eines Kühlsystems für Schweißkomponenten nach dem Stand der Technik;
- Fig. 2: ein schematisches Blockschaltbild eines Kühlsystems für Schweißkomponenten mit einem Hydrozyklon im Kühlkreislauf;
- Fig. 3: ein schematisches Schnittbild durch eine erste Ausführungsform eines Hydrozyklons zur Verwendung als Filter in einem Kühlsystem für Schweißkomponenten;
- Fig. 4: ein schematisches Schnittbild durch eine zweite Ausführungsform eines Hydrozyklons in einem Kühlsystem für Schweißkomponenten; und
- Fig. 5: ein schematisches Schnittbild durch einen Behälter für Kühlflüssigkeit mit einem darin integrierten Hydrozyklon.

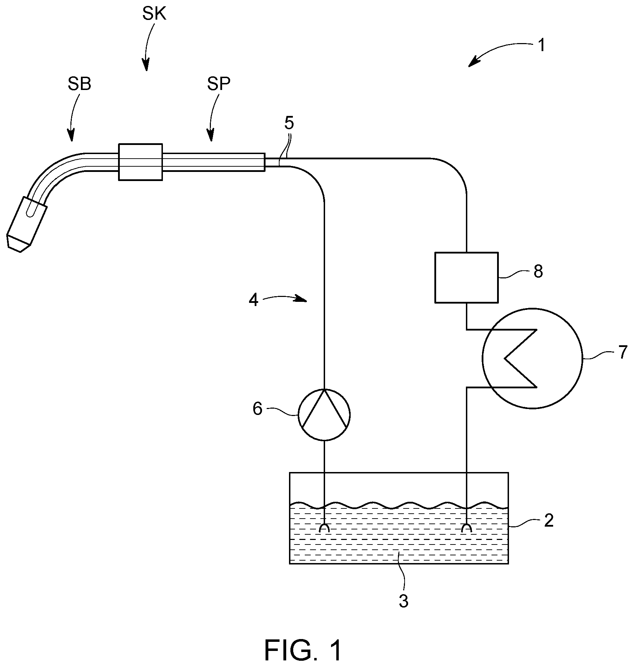

Fig. 1 zeigt ein schematisches Blockschaltbild eines Kühlsystems 1 für Schweißkomponenten SK nach dem Stand der Technik. Das Kühlsystem 1 zur Kühlung einer Schweißkomponente SK, beispielsweise eines Schweißbrenners SB oder eines Schlauchpakets SP, beinhaltet zumindest einen Behälter 2 für die Kühlflüssigkeit 3. Die Kühlflüssigkeit 3 ist insbesondere durch Wasser mit entsprechenden Zusätzen gebildet, welche vom Behälter 2 in einem Kühlkreislauf 4 geführt wird. Der Kühlkreislauf 4 ist durch entsprechende Kühlleitungen 5 gebildet. Zumindest eine im Kühlkreislauf 4 angeordnete Pumpe 6 fördert die Kühlflüssigkeit 3 durch die Kühlleitungen 5 im Kühlkreislauf 4. Innerhalb des Kühlkreislaufes 4 ist in einer Kühlleitung 5 zumindest ein Wärmetauscher 7 angeordnet, über den die Verlustwärme an die Umgebung abgeführt wird. Zweckmäßigerweise ist der Wärmetauscher 7 in einer rücklaufenden Kühlleitung 5 des Kühlkreislaufs 4 angeordnet, da hier der Unterschied der Temperatur der Kühlflüssigkeit 3 zur Temperatur der Umgebung am größten ist. Um Verunreinigungen bzw. Partikel P aus der Kühlflüssigkeit 3 zu filtrieren und Komponenten innerhalb des Kühlkreislaufs 4 zu schützen, kann zumindest ein Filter 8 innerhalb des Kühlkreislaufs 4 angeordnet sein. Konventionelle Filter 8 scheiden Partikel P ab einer bestimmten mittleren Größe mit Filtermaterialien ab, welche eine Maschenweite bzw. Porengröße aufweisen, die entsprechend kleiner ist, als die mittlere Größe der abzuscheidenden Partikel P. Im Laufe der Zeit verstopfen solche Filter 8 und müssen gereinigt oder ausgetauscht werden. Die Wartungsintervalle werden umso kürzer je feiner die Filter 8 ausgebildet sind.

Wird kein Filter 8 eingesetzt oder ein Filter 8 mit zu großer Maschenweite bzw. Porenweite, gelangen relativ große Partikel P in den Kühlkreislauf 4 und können Komponenten, wie die Pumpe 6 oder auch die Schweißkomponenten SK beschädigen und die Kühlwirkung beeinträchtigen.

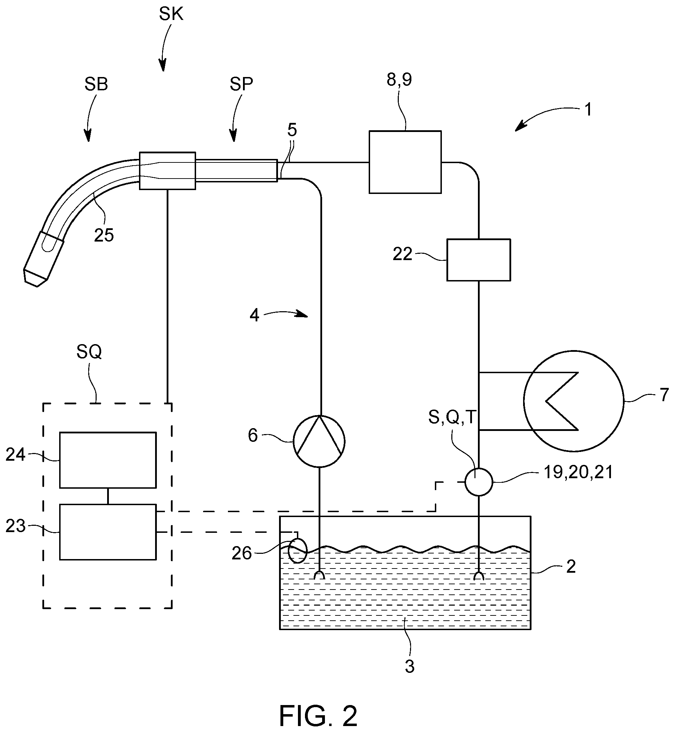

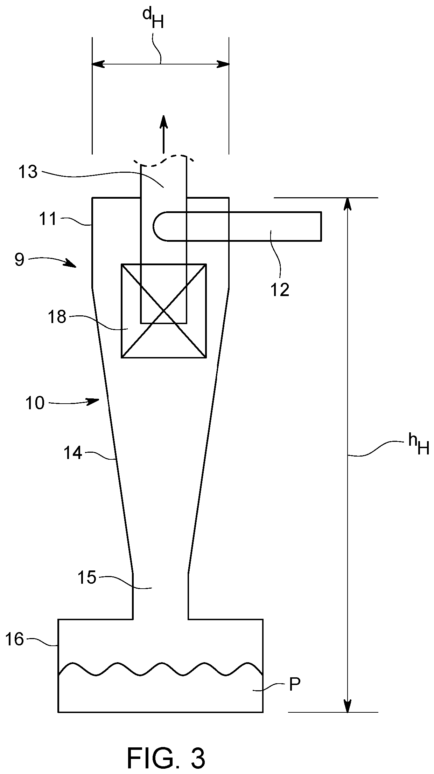

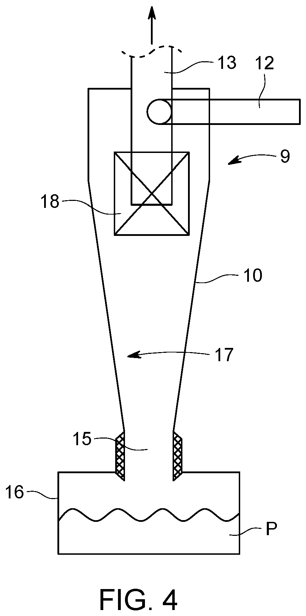

Fig. 2 zeigt ein schematisches Blockschaltbild eines Kühlsystems 1 für Schweißkomponenten SK gemäß der Erfindung. Die zu kühlende Schweißkomponente SK, insbesondere der Schweißbrenner SB und das Schlauchpaket SP, weist einen Kühlkanal 25 zur Führung der Kühlflüssigkeit 3 auf, der einen Teil des Kühlkreislaufs 4 bildet. Der zumindest eine Filter 8 ist durch ein Hydrozyklon 9 bzw. einen Fliehkraftabscheider gebildet. Der Hydrozyklon 9 besteht aus einem rotationssymmetrischen Hohlkörper 10, mit einem oberen zylindrischen Bereich 11 mit einer tangentialen Zuleitung 12 für die zu filternde Kühlflüssigkeit 3 und einem axial angeordneten Tauchrohr 13 zum Abführen der gefilterten Kühlflüssigkeit 3 nach oben, und mit einem unteren konisch zusammenlaufenden Bereich 14 mit einem Auslass 15 für die abgeschiedenen Partikel P aus der Kühlflüssigkeit 3, welche in einem entsprechenden Sammelbehälter 16 gesammelt werden (siehe Fig. 3 und 4).

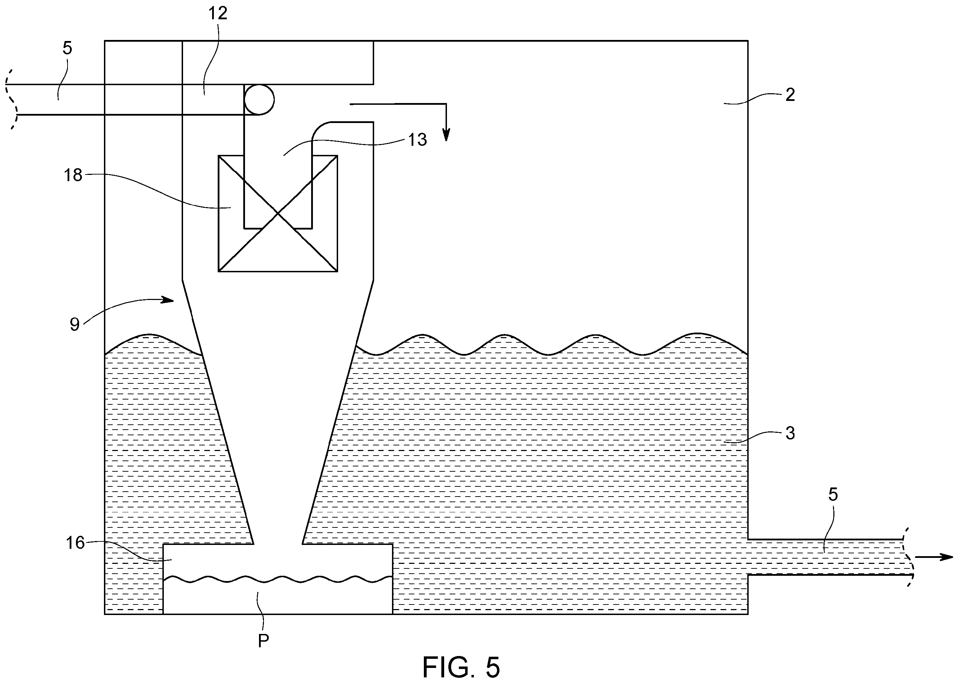

Im Gegensatz zu konventionellen Filtern 8 mit einem filtrierenden Filtermedium trennen Hydrozyklone 9 die Partikel P von der Kühlflüssigkeit 3 aufgrund ihres Gewichts und der dadurch resultierenden unterschiedlichen Strömungsgeschwindigkeiten. Abgesehen davon, dass die abgeschiedenen Partikel P gelegentlich entsorgt werden müssen, benötigen Hydrozyklone 9 keine Wartung. Da ein Hydrozyklon 9 auch keine beweglichen Teile aufweisen sind sie auch einfach und kostengünstig herstellbar. Beispielsweise kann ein Hydrozyklon 9 für die Filterung der Kühlflüssigkeit 3 eines Kühlsystems 1 für Schweißkomponenten SK relativ klein und aus Kunststoff hergestellt werden. Somit ist der Platzbedarf für den zumindest einen Hydrozyklon 9 im Kühlkreislauf 4 nicht besonders groß. Erfindungsgemäß ist der Hydrozyklon 9 im Behälter 2 für die Kühlflüssigkeit 3 angeordnet und integriert (siehe Fig. 5).

Bei Bedarf können auch mehrere Hydrozyklone 9 gleicher Bauart oder unterschiedlicher Bauart (zur Abscheidung unterschiedlich großer Partikel P) im Kühlkreislauf 4 hintereinander in Serie angeordnet sein.

Die Pumpe 6 kann durch eine Kolbenpumpe oder Zahnradpumpe gebildet sein. Solche Pumpen 6 sind zwar anfälliger auf Verunreinigungen in der Kühlflüssigkeit 3, weisen aber den Vorteil eines direkt proportionalen Zusammenhangs zwischen Drehzahl und geförderter Menge an Flüssigkeit auf, was die Regelung der Kühlung erleichtert.

Im Kühlkreislauf 4 können zumindest ein Temperatursensor 19 zur Messung der Temperatur T der Kühlflüssigkeit 3, zumindest ein Durchflusssensor 20 zur Messung des Durchflusses Q der Kühlflüssigkeit und bzw. oder zumindest ein Leitwertsensor 21 zur Messung des Leitwerts S der Kühlflüssigkeit 3 im Kühlkreislauf 4 angeordnet sein. Der Temperatursensor 19, Durchflusssensor 20 und Leitwertsensor 21 ist hier in der rücklaufenden Kühlleitung 5 des Kühlkreislaufs 4 angeordnet. Eine Platzierung an einer oder an mehreren geeigneten Stellen innerhalb des Kühlkreislaufs 4 ist ebenfalls möglich. Darüber hinaus können der Temperatursensor 19, Durchflusssensor 20 und Leitwertsensor 21 auch durch einen kombinierten Sensor gebildet sein. Die Sensoren sind vorzugsweise mit der Steuereinrichtung 23 der Schweißstromquelle SQ verbunden, um eine Regelung der Kühlung und die Anzeige relevanter Daten auf einer Anzeige 24 zu ermöglichen. Im Behälter 2 für die Kühlflüssigkeit kann auch ein Sensor 26 zur Messung des Pegels der Kühlflüssigkeit 3 im Behälter 2 angeordnet sein, der ebenfalls vorzugsweise mit der Steuereinrichtung 23 verbunden ist.

Fig. 3 zeigt ein schematisches Schnittbild durch eine erste Ausführungsform eines Hydrozyklons 9 zur Verwendung als Filter 8 in einem Kühlsystem 1 für Schweißkomponenten SK. Der Hydrozyklon 9 weist einen rotationssymmetrischen Hohlkörper 10 auf, mit einem oberen zylindrischen Bereich 11 mit einer tangentialen Zuleitung 12 für die zu filternde Kühlflüssigkeit 3 und einem axial angeordneten Tauchrohr 13 zum Abführen der gefilterten Kühlflüssigkeit 3 nach oben, und mit einem unteren konisch zusammenlaufenden Bereich 14 mit einem Auslass 15 für die abgeschiedenen Partikel P aus der Kühlflüssigkeit 3. Unter dem Auslass 15 des Hydrozyklons 9 ist ein Sammelbehälter 16 für die abgeschiedenen Partikel P vorgesehen, der in dieser Ausführungsform fix mit dem Auslass 15 verbunden ist.

Der Hydrozyklon 9 ist vorzugsweise aus Kunststoff gebildet und beispielsweise im Spritzgiessverfahren hergestellt. Für die Anwendung bei üblichen Schweißkomponenten SK weist der Hydrozyklon 9 beispielsweise eine Höhe h_{H} zwischen 50 mm und 300 mm und einen Durchmesser d_{H} zwischen 20 mm und 100 mm auf.

Im Hydrozyklon 9, vorzugsweise im Tauchrohr 13, kann ein zusätzlicher Filter 18, vorzugsweise ein Feinstfilter, angeordnet sein, der besonders kleine Partikel P aus der Kühlflüssigkeit abscheidet. Der zusätzliche Filter 18 kann auf Lebensdauer ausgelegt sein, sodass er während der Lebensdauer des Hydrozyklons 9 nie gewechselt werden muss, aber auch austauschbar sein.

Fig. 4 zeigt ein schematisches Schnittbild durch eine zweite Ausführungsform eines Hydrozyklons 9 in einem Kühlsystem 1 für Schweißkomponenten SK. Hier weist die Innenseite des Hohlkörpers 10 des Hydrozyklons 9 eine Beschichtung 17, beispielsweise aus Keramik oder Gummi, auf. Dies kann die Lebensdauer des Hydrozyklons 9, insbesondere bei besonders abrasiven Partikel P in der Kühlflüssigkeit 3 erhöhen und auch die Abscheidung der Partikel P aus der Kühlflüssigkeit 3 unterstützen.

Weiters ist der Sammelbehälter 16 für die abgeschiedenen Partikel P hier abnehmbar, beispielsweise vom Auslass 15 abschraubbar ausgebildet, sodass ein Entleeren oder Wechseln des Sammelbehälters 16 einfach möglich ist.

Schließlich zeigt Fig. 5 ein schematisches Schnittbild durch einen Behälter 2 für Kühlflüssigkeit 3 mit einem darin integrierten Hydrozyklon 9. Dabei ist der Hydrozyklon 9 einstückig mit dem Behälter 2 für die Kühlflüssigkeit 3 hergestellt. Insbesondere mit einem Spritzgiessverfahren oder 3D-Druckverfahren lässt sich die Herstellung relativ einfach und kostengünstig realisieren.

## Patentansprüche

1. Kühlsystem (1) zur Kühlung einer Schweißkomponente (SK), insbesondere eines Schweißbrenners (SB) und/oder eines Schlauchpakets (SP), mit zumindest einem Behälter (2) für Kühlflüssigkeit (3), einem Kühlkreislauf (4) mit entsprechenden Kühlleitungen (5), zumindest einer im Kühlkreislauf (4) angeordneten Pumpe (6) zur Förderung der Kühlflüssigkeit (3) durch die Kühlleitungen (5) im Kühlkreislauf (4), zumindest einem in einer Kühlleitung (5) angeordneten Wärmetauscher (7), sowie zumindest einem im Kühlkreislauf (4) angeordneten Filter (8), wobei zumindest ein Filter (8) durch ein Hydrozyklon (9) gebildet ist, welcher Hydrozyklon (9) einen rotationssymmetrischen Hohlkörper (10) aufweist, mit einem oberen zylindrischen Bereich (11) mit einer tangentialen Zuleitung (12) für die zu filternde Kühlflüssigkeit (3) und einem axial angeordneten Tauchrohr (13) zum Abführen der gefilterten Kühlflüssigkeit (3) nach oben, und mit einem unteren konisch zusammenlaufenden Bereich (14) mit einem Auslass (15) für die abgeschiedenen Partikel (P) aus der Kühlflüssigkeit (3), **dadurch gekennzeichnet, dass** der zumindest eine Hydrozyklon (9) im Behälter (2) für die Kühlflüssigkeit (3) angeordnet und integriert ist.

2. Kühlsystem (1) nach Anspruch 1, **dadurch gekennzeichnet, dass** im Kühlkreislauf (4) mehrere Hydrozyklone (9) in Serie angeordnet sind.

3. Kühlsystem (1) nach Anspruch 1 oder 2, **dadurch gekennzeichnet, dass** unter dem Auslass (15) jedes Hydrozyklons (9) ein Sammelbehälter (16) für die abgeschiedenen Partikel (P) vorgesehen ist, welcher Sammelbehälter (16) vom Auslass (15) vorzugsweise abnehmbar, beispielsweise abschraubbar, ausgebildet ist.

4. Kühlsystem (1) nach einem der Ansprüche 1 bis 3, **dadurch gekennzeichnet, dass** der Hydrozyklon (9) aus Kunststoff gebildet ist.

5. Kühlsystem (1) nach einem der Ansprüche 1 bis 4, **dadurch gekennzeichnet, dass** die Innenseite des Hohlkörpers (10) des Hydrozyklons (9) eine Beschichtung (17), beispielsweise aus Keramik oder Gummi, aufweist.

6. Kühlsystem (1) nach einem der Ansprüche 1 bis 5, **dadurch gekennzeichnet, dass** der zumindest eine Hydrozyklon (9) einstückig mit dem Behälter (2) für die Kühlflüssigkeit (3) hergestellt ist.

7. Kühlsystem (1) nach einem der Ansprüche 1 bis 6, **dadurch gekennzeichnet, dass** im Kühlkreislauf (4) in Serie mit dem zumindest einen Hydrozyklon (9) ein zusätzlicher Filter (18), vorzugsweise ein Feinfilter oder Feinstfilter, angeordnet ist.

8. Kühlsystem (1) nach Anspruch 7, **dadurch gekennzeichnet, dass** der zusätzliche Filter (18) im Hydrozyklon (9) integriert ist.

9. Kühlsystem (1) nach Anspruch 8, **dadurch gekennzeichnet, dass** der zusätzliche Filter (18) im Bereich des Tauchrohrs (13) des Hydrozyklons (9) angeordnet ist.

10. Kühlsystem (1) nach einem der Ansprüche 1 bis 9, **dadurch gekennzeichnet, dass** die Pumpe (6) durch eine Kolbenpumpe oder eine Zahnradpumpe gebildet ist.

11. Kühlsystem (1) nach einem der Ansprüche 1 bis 10, **dadurch gekennzeichnet, dass** im Kühlkreislauf (4) ein Temperatursensor (19) zur Messung der Temperatur (T), ein Durchflusssensor (20) zur Messung des Durchflusses (Q) und bzw. oder ein Leitwertsensor (21) zur Messung des Leitwerts (S) der Kühlflüssigkeit (3) im Kühlkreislauf (4) angeordnet ist.

12. Kühlsystem (1) nach einem der Ansprüche 1 bis 11, **dadurch gekennzeichnet, dass** im Kühlkreislauf (4) eine Einrichtung (22) zur Deionisierung der Kühlflüssigkeit (3) vorgesehen ist.

13. Kühlsystem (1) nach einem der Ansprüche 1 bis 12, **dadurch gekennzeichnet, dass** die Kühlflüssigkeit (3) durch Wasser mit Zusätzen (24), insbesondere Glykol, gebildet ist.

14. Schweißkomponente (SK), insbesondere Schweißbrenner (SB) und bzw. oder Schlauchpaket (SP), mit einem Kühlkanal (25) zur Führung einer Kühlflüssigkeit (3), **dadurch gekennzeichnet, dass** ein Kühlsystem (1) nach einem der Ansprüche 1 bis 13 vorgesehen ist, dessen Kühlkreislauf (4) zumindest teilweise durch den Kühlkanal (25) gebildet ist.

## Claims

1. Cooling system (1) for cooling a welding component (SK), in particular a welding torch (SB) and/or a hose package (SP), comprising at least one container (2) for coolant (3), a cooling circuit (4) with corresponding cooling lines (5), at least one pump (6) arranged in the cooling circuit (4) for conveying the coolant (3) through the cooling lines (5) in the cooling circuit (4), at least one heat exchanger (7) arranged in a cooling line (5), as well as at least one filter (8) arranged in the cooling circuit (4), wherein at least one filter (8) is formed by a hydrocyclone (9), which hydrocyclone (9) comprises a rotationally symmetrical hollow body (10), with an upper cylindrical region (11) with a tangential inlet (12) for the coolant (3) to be filtered and an axially arranged immersion tube (13) for discharging the filtered coolant (3) upwards, and with a lower conically converging region (14) with an outlet (15) for the particles (P) separated from the coolant (3), **characterized in that** the at least one hydrocyclone (9) is arranged and integrated in the container (2) for the coolant (3).

2. Cooling system (1) according to claim 1, **characterized in that** in the cooling circuit (4) several hydrocyclones (9) are arranged in series.

3. Cooling system (1) according to claim 1 or 2, **characterized in that** beneath the outlet (15) of each hydrocyclone (9) a collecting container (16) for the particles (P) separated is provided, which collecting container (16) is preferably detachable, for example screwable, from the outlet (15).

4. Cooling system (1) according to one of claims 1 to 3, **characterized in that** the hydrocyclone (9) is formed from plastic.

5. Cooling system (1) according to one of claims 1 to 4, **characterized in that** the inner side of the hollow body (10) of the hydrocyclone (9) comprises a coating (17), for example of ceramic or rubber.

6. Cooling system (1) according to one of claims 1 to 5, **characterized in that** the at least one hydrocyclone (9) is produced in one piece with the container (2) for the coolant (3).

7. Cooling system (1) according to one of claims 1 to 6, **characterized in that** in the cooling circuit (4), in series with the at least one hydrocyclone (9), an additional filter (18), preferably a fine filter or microfilter, is arranged.

8. Cooling system (1) according to claim 7, **characterized in that** the additional filter (18) is integrated in the hydrocyclone (9).

9. Cooling system (1) according to claim 8, **characterized in that** the additional filter (18) is arranged in the region of the immersion tube (13) of the hydrocyclone (9).

10. Cooling system (1) according to one of claims 1 to 9, **characterized in that** the pump (6) is formed by a piston pump or a gear pump.

11. Cooling system (1) according to one of claims 1 to 10, **characterized in that** in the cooling circuit (4) a temperature sensor (19) for measuring the temperature (T), a flow sensor (20) for measuring the flow (Q), and/or a conductivity sensor (21) for measuring the conductivity (S) of the coolant (3) in the cooling circuit (4) is arranged.

12. Cooling system (1) according to one of claims 1 to 11, **characterized in that** in the cooling circuit (4) a device (22) for deionizing the coolant (3) is provided.

13. Cooling system (1) according to one of claims 1 to 12, **characterized in that** the coolant (3) is formed by water with additives (24), in particular glycol.

14. Welding component (SK), in particular welding torch (SB) and/or hose package (SP), with a cooling channel (25) for guiding a coolant (3), **characterized in that** a cooling system (1) according to one of claims 1 to 13 is provided, the cooling circuit (4) of which is at least partially formed by the cooling channel (25).

## Revendications

1. Système de refroidissement (1) pour le refroidissement d'un composant de soudage (SK), notamment d'une torche de soudage (SB) et/ou d'un pack de tuyaux (SP), comprenant au moins un réservoir (2) pour liquide de refroidissement (3), un circuit de refroidissement (4) avec des conduites de refroidissement appropriées (5), au moins une pompe (6) disposée dans le circuit de refroidissement (4) pour faire circuler le liquide de refroidissement (3) à travers les conduites de refroidissement (5) dans le circuit de refroidissement (4), au moins un échangeur de chaleur (7) disposé dans une conduite de refroidissement (5), ainsi qu'au moins un filtre (8) disposé dans le circuit de refroidissement (4), **caractérisé en ce qu'**au moins un filtre (8) est formé par un hydrocyclone (9), lequel hydrocyclone (9) présente un corps creux à symétrie de rotation (10), avec une zone cylindrique supérieure (11) comportant une alimentation tangentielle (12) pour le liquide de refroidissement (3) à filtrer et un tube plongeur (13) disposé axialement pour évacuer le liquide de refroidissement filtré (3) vers le sommet, et avec une zone inférieure conique convergente (14) comportant une sortie (15) pour les particules séparées (P) du liquide de refroidissement (3), **caractérisé en ce que** l'au moins un hydrocyclone (9) est disposé et intégré dans le réservoir (2) pour le liquide de refroidissement (3).

2. Système de refroidissement (1) selon la revendication 1, **caractérisé en ce que** plusieurs hydrocyclones (9) sont disposés en série dans le circuit de refroidissement (4).

3. Système de refroidissement (1) selon la revendication 1 ou 2, **caractérisé en ce qu'**un récipient collecteur (16) pour les particules séparées (P) est disposé sous la sortie (15) de chaque hydrocyclone (9), lequel récipient collecteur (16) est conçu pour être de préférence amovible, par exemple dévissable, de la sortie (15).

4. Système de refroidissement (1) selon l'une des revendications 1 à 3, **caractérisé en ce que** l'hydrocyclone (9) est formé en matière plastique.

5. Système de refroidissement (1) selon l'une des revendications 1 à 4, **caractérisé en ce que** la face intérieure du corps creux (10) de l'hydrocyclone (9) présente un revêtement (17), par exemple en céramique ou en caoutchouc.

6. Système de refroidissement (1) selon l'une des revendications 1 à 5, **caractérisé en ce que** l'au moins un hydrocyclone (9) est fabriqué d'une seule pièce avec le réservoir (2) pour le liquide de refroidissement (3).

7. Système de refroidissement (1) selon l'une des revendications 1 à 6, **caractérisé en ce qu'**un filtre supplémentaire (18), de préférence un filtre fin ou un filtre ultrafin, est disposé en série avec l'au moins un hydrocyclone (9) dans le circuit de refroidissement (4).

8. Système de refroidissement (1) selon la revendication 7, **caractérisé en ce que** le filtre supplémentaire (18) est intégré dans l'hydrocyclone (9).

9. Système de refroidissement (1) selon la revendication 8, **caractérisé en ce que** le filtre supplémentaire (18) est disposé dans la zone du tube plongeur (13) de l'hydrocyclone (9).

10. Système de refroidissement (1) selon l'une des revendications 1 à 9, **caractérisé en ce que** la pompe (6) est formée par une pompe à piston ou une pompe à engrenages.

11. Système de refroidissement (1) selon l'une des revendications 1 à 10, **caractérisé en ce qu'**un capteur de température (19) pour mesurer la température (T), un capteur de débit (20) pour mesurer le débit (Q) et/ou un capteur de conductivité (21) pour mesurer la conductivité (S) du liquide de refroidissement (3) sont disposés dans le circuit de refroidissement (4).

12. Système de refroidissement (1) selon l'une des revendications 1 à 11, **caractérisé en ce qu'**un dispositif (22) pour la déionisation du liquide de refroidissement (3) est disposé dans le circuit de refroidissement (4).

13. Système de refroidissement (1) selon l'une des revendications 1 à 12, **caractérisé en ce que** le liquide de refroidissement (3) comprend de l'eau avec des additifs (24), notamment du glycol.

14. Composant de soudage (SK), notamment torche de soudage (SB) et/ou pack de tuyaux (SP), comportant un canal de refroidissement (25) pour guider un liquide de refroidissement (3), **caractérisé en ce qu'**un système de refroidissement (1) selon l'une des revendications 1 à 13 est disposé, dont le circuit de refroidissement (4) est au moins partiellement constitué par le canal de refroidissement (25).
